# EUROPEAN PATENT APPLICATION

(11) **EP 2 555 398 A1**
(43) Date of publication of application: **06.02.2013**
(21) Application number: 11856668.6
(22) Date of filing: 24.01.2011
(51) Int. Cl.: H02M 1/36

(54) **POWER SUPPLY CIRCUIT WITH LOW-VOLTAGE CONTROL AND PRODUCING METHOD THEREOF**

(71) Applicant: Sunsun Lighting China Co., Ltd, Jiangsu 210012 (CN)
(72) Inventor: SUN, Jianning, Nanshan Guangdong 518000 (CN)
(74) Representative: ABG Patentes, S.L.
(86) International application number: PCT/CN2011/070546
(87) International publication number: WO 2012/100406

(57) **Abstract**

A power supply circuit with low-voltage control and a producing method thereof. The circuit includes an auxiliary power supply (16), a high-voltage startup unit (19), a switching circuit (18), and a control circuit (15). When the circuit is powered on, a storage capacitor (C4) in the switching circuit is charged by the high-voltage startup unit and supplies the control circuit with a low-voltage power source so that the control circuit is started up completely. After the circuit enters a normal operation state, the control circuit detects the voltage across the storage capacitor and dynamically controls the switching circuit to charge the storage capacitor so that a steady low-voltage power source supplied for the control circuit is obtained. Without reducing the efficiency of the power supply, the circuit is simplified and the cost is lowered.

## Description

### Field of the Invention

The present invention belongs to the field of electronic technology, and particularly relates to a low voltage control power supply circuit and a production method thereof.

### Background of the Invention

Usually, AC-DC or DC-DC conversion power supplies are required in electronic devices, such as chargers, LED driving power supply, and notebook power supply, etc. These power supplies contain internal control circuits, which require low voltage power supply. In the current market, the control power supply in AC-DC or high voltage DC-DC conversion power supply is usually generated through one of the following approaches: rectified high voltage direct current flows through resistor or high voltage MOSFET to decrease the voltage, and then is supplied to control power; or, electric current flows through the auxiliary winding of a transformer or the coupling coil of an inductor and then is rectified by diode. However, the power supply efficiency in the first approach is very low, while the circuit structure in the second approach is complex and costly.

### Disclosure of the Invention

### Technical Problem

An object of the present invention is to provide a low voltage control power supply circuit, so as to solve the problems of low power supply efficiency, complex circuit structure, and high cost in the prior art.

Another object of the present invention is to provide a conversion power supply that utilizes the low voltage control power supply circuit described above.

Another object of the present invention is to provide a production method for the low voltage control power supply circuit.

### Technical Solution

The present invention is implemented as follows: a low voltage control power supply circuit, connected between a rectifier circuit and a current regulator unit, comprising:

An auxiliary power supply, wherein, the input terminal of the auxiliary power supply is connected to the output terminal of the rectifier circuit;

A high voltage starter unit, wherein, the input terminal of the high voltage starter unit is connected to the output terminal of the auxiliary power supply;

A switching circuit, wherein, the first control terminal of the switching circuit is connected to the output terminal of the auxiliary power supply, the input terminal of the switching circuit is connected to the output terminal of the current regulator unit, and the first sampling terminal of the switching circuit is connected to the output terminal of the high voltage starter unit; and

A control circuit, wherein, the main control terminal of the control circuit is connected to the first control terminal of the switching circuit, the stored energy control terminal of the control circuit is connected to the second control terminal of the switching circuit, the current sampling control terminal of the control circuit is connected to the third control terminal of the switching circuit, the capacitance sampling terminal of the control circuit is connected to the first sampling terminal of the switching circuit, the current sampling terminal of the control circuit is connected to the second sampling terminal of the switching circuit, and the peak-valley detection terminal of the control circuit is connected to the output terminal of the current regulator unit;

When the auxiliary power supply is powered up, the switching circuit is charged through the high voltage starter unit, to start the control circuit; after finishing power up, the control circuit controls the switching circuit dynamically to charge, so as to provide low voltage power supply for the control circuit.

The present invention provides a production method for low voltage control power supply circuit, said method comprising the following steps:

Charging the auxiliary power supply, and starting up the high voltage starter unit;

Charging the switching circuit by the high voltage starter unit, to start the control circuit;

The switching circuit being dynamically controlled by the control circuit to charge;

Low voltage DC power supply being provided by the switching circuit for the control circuit;

### Beneficial Effects

In the present invention, the control circuit is activated by an auxiliary power supply, and low voltage DC power supply is provided to the control circuit by innovatively charging an energy storage capacitor in the switching circuit; in that way, the circuit is simplified and the cost is reduced, without reducing the power supply efficiency.

### Brief Description of the Drawings

Figure 1 is a circuit diagram of the AC-DC LED DC power supply provided in the first embodiment of the present invention;

Figure 2 is an internal structure diagram of the high voltage starter unit provided in the second embodiment of the present invention;

Figure 3 is an internal structure diagram of the control circuit provided in the third embodiment of the present invention.

### Embodiments

To make the objects, technical solutions and advantages of the present invention more clear and obvious, the present invention will be further described in the embodiments with reference to the accompanying drawings. It should be understood that the embodiments described here are only provided to interpret the present invention, but are not intended to limit the present invention.

In the present invention, the control circuit is initiated by an auxiliary power supply, and low voltage DC power supply is provided to the control circuit by innovatively charging an energy storage capacitor in the switching circuit.

A low voltage control power supply circuit is provided in the first embodiment of the present invention. The low voltage control power supply circuit is connected between the rectifier circuit and the current regulator unit, and comprises:

An auxiliary power supply, wherein, the input terminal of the auxiliary power supply is connected to the output terminal of the rectifier circuit;

A high voltage starter unit, wherein, the input terminal of the high voltage starter unit is connected to the output terminal of the auxiliary power supply unit;

A switching circuit, wherein, the first control terminal of the switching circuit is connected to the output terminal of the auxiliary power supply, the input terminal of the switching circuit is connected to the output terminal of the current regulator unit, and the first sampling terminal of the switching circuit is connected to the output terminal of the high voltage starter unit; and

A control circuit, wherein, the main control terminal of the control circuit is connected to the first control terminal of the switching circuit, the stored energy control terminal of the control circuit is connected to the second control terminal of the switching circuit, the current sampling control terminal of the control circuit is connected to the third control terminal of the switching circuit, the capacitance sampling terminal of the control circuit is connected to the first sampling terminal of the switching circuit, the current sampling terminal of the control circuit is connected to the second sampling terminal of the switching circuit, and the peak-valley detection terminal of the control circuit is connected to the output terminal of the current regulator unit;

When the auxiliary power supply is powered up, the switching circuit is charged through the high voltage starter unit, to start the control circuit; after finishing power up, the control circuit controls the switching circuit dynamically to charge, so as to provide low voltage power supply for the control circuit.

The present invention will be detailed in the following embodiments.

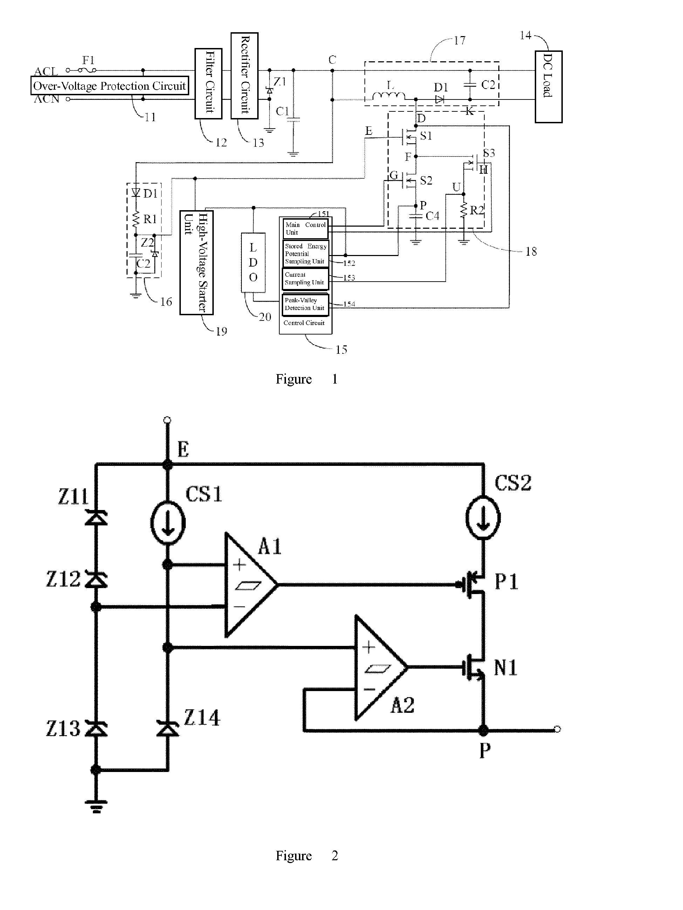

Figure 1 is a circuit diagram of the AC-DC LED DC power supply provided in the first embodiment of the present invention; for the sake of clarity, only the parts related to the present invention are shown.

In the embodiment of the present invention, the AC power supply is connected to the input terminal of a rectifier circuit 13 via an over-voltage protection unit 11 and an AC input filter unit 12; the output terminals of rectifier circuit 13 are connected to the input terminal of an auxiliary power supply 16 and the input terminal of a current regulator unit 17 respectively; with the connection point being node C; the rectifier circuit 13 can be a bridge rectifier circuit.

The auxiliary power supply 16 comprises: a diode D1, a current limiting resistor R1, and a smoothing capacitor C2 that are connected in series, as well as a clamping diode Z2 that is connected in parallel to the smoothing capacitor C2, wherein, the positive electrode of diode D1 is the input terminal of the auxiliary power supply 16, the negative electrode of diode D1 is grounded via the current limiting resistor R1 and smoothing capacitor C2, the positive electrode of clamping diode Z2 is grounded, and the negative electrode of clamping diode Z2 is the output terminal of the auxiliary power supply 16.

The current regulator unit 17 comprises: a power inductor L2, a rectifier diode D4, and a filter capacitor C3, wherein, one terminal of the power inductor L2 serves as the input terminal of the current regulator unit 17 and is connected to the output terminal of the rectifier circuit 13, the other terminal of the power inductor L2 is connected to the positive electrode of the rectifier diode D4, with the connection point being node D; the negative electrode of the rectifier diode D4 is connected to one terminal of the filter capacitor C3, with the connection point being node K; the other terminal of the filter capacitor C3 serves as the input terminal of the current regulator unit 17 and is connected to the output terminal of the rectifier circuit 13; in addition, the two terminals of the filter capacitor C3 serve as the output terminals of the current regulator unit 17 and are connected to a DC load 14.

The regulating terminals of the current regulator unit 17 are connected with the input terminal of switching circuit 18 and the peak-valley detection terminal of control circuit 15 respectively.

The switching circuit 18 comprises:

A main switch S1, wherein, the control terminal of the main switch S1 serves as the first control terminal of the switching circuit 18 and is connected to the output terminal of the auxiliary power supply 16, with the connection point being node E; the input terminal of the main switch S1 serves as the input terminal of the switching circuit 18 and is connected to the current regulator unit 17, with the connection point being node D;

A drive control tube S2, wherein, the control terminal of the drive control tube S2 serves as the second control terminal of the switching circuit 18 and is connected to the stored energy control terminal of the control circuit 15, with the connection point being node G; the input terminal of the drive control tube S2 is connected to the output terminal of the main switch S1, with the connection point being node F; the output terminal of the drive control tube S2 serves as the first sampling terminal of the switching circuit 18 and is grounded via an energy storage capacitor C4; the connection point between drive control tube S2 and energy storage capacitor C4 is node P;

A drive control tube S3, wherein, the control terminal of the drive control tube S3 serves as the third control terminal of the switching circuit 18 and is connected to the current sampling control terminal of the control circuit 15, with the connection point being node H; the input terminal of the drive control tube S3 is connected to the output terminal of the main switch S1; the output terminal of the drive control tube S3 serves as the second sampling terminal of the switching circuit 18 and is grounded via a sampling resistor R2; the connection point between drive control tube S3 and sampling resistor R2 is node U.

The high voltage starter unit 19 comprises:

Comparator A1, comparator A2, start control tube P1, start control tube N1, current source CS1, current source CS2, Zener diode Z11, Zener diode Z12, Zener diode Z13, and Zener diode Z14;

The positive electrode of current source CS1 serves as the input terminal of high voltage starter unit 19 and is connected to the positive electrode of the current source CS2, the negative electrode of current source CS1 is connected to the positive input terminal of the comparator A1 and the positive input terminal of the comparator A2 at the same time, the inverted input terminal of the comparator A1 is connected to the positive electrode of the Zener diode Z12, the negative electrode of the Zener diode Z12 is connected to the positive electrode of the Zener diode Z11, the negative electrode of the Zener diode Z11 is connected to the positive electrode of the current source CS1, the inverted input terminal of the comparator A1 is also connected to the negative electrode of the Zener diode Z13, the positive electrode of the Zener diode Z13 is grounded, the output terminal of the comparator A1 is connected to the control terminal of the start control tube P1, the input terminal of the start control tube P1 is connected to the negative electrode of the current source CS2, the output terminal of the start control tube P1 is connected to the input terminal of the start control tube N1, the control terminal of the start control tube N1 is connected to the output terminal of the comparator A2, the output terminal of the start control tube N1 serves as the output terminal of the high voltage starter unit 19 and is connected to the inverted input terminal of the comparator A2, the positive input terminal of the comparator A2 is connected to the negative electrode of the Zener diode Z14, and the positive electrode of the Zener diode Z14 is grounded.

The control circuit 15 comprises:

A main control unit 151, wherein, the stored energy control and output terminal of the main control unit is the stored energy control terminal of the control circuit, and the current control and output terminal of the main control unit is the current sampling control terminal of the control circuit;

A stored energy potential sampling unit 152, wherein, the input terminal of the stored energy potential sampling unit is the capacitance sampling terminal of the control circuit;

A current sampling unit 153, wherein, the input terminal of the current sampling unit is the current sampling terminal of the control circuit; and

A peak-valley detection unit 154, wherein, the input terminal of the peak-valley detection unit is the peak-valley detection terminal of the control circuit.

A low dropout regulator (LDO) unit 20, wherein, the input terminal of the LDO unit is connected to the first sampling terminal of the switching circuit 18, and the output terminal of the LDO unit is connected to the power input terminal of the control circuit 15; the LDO unit 20 can obtain a fixed DC output voltage from the energy storage capacitor C4, and thereby provide a stable low voltage working power supply for the control circuit 15.

In an embodiment of the present invention, a protection fuse F1 can be connected in series between the null line ACN and the over-voltage protection unit 11; or, a clamping diode Z1 can be connected in series between the output terminal of the rectifier circuit 13 and the ground, wherein, the positive electrode of the clamping diode Z1 is grounded, and the negative electrode of the clamping diode Z1 is grounded via a smoothing capacitor C1.

In a preferred embodiment of the present invention, the main switch S1, drive control tube S2, and drive control tube S3 can be discrete devices or integrated tubes, and can be MOSFET or triode.

In the embodiment of the present invention, when the AC-DC LED DC power supply unit is powered up, the AC power supply is fed through the protection fuse F1 and over-voltage protection unit 11 to the AC input filter unit 12, where the AC power supply is filtered; the output from the AC input filter unit 12 is rectified by the rectifier circuit 13; the clamping diode Z1 stabilizes the potential at point C, the rectifying filter capacitor C1 rectifies the current after full-wave rectification, to generate stable high-voltage pulsed DC power supply.

The high-voltage pulsed DC power supply is used as the input of the auxiliary power supply 16 to charge smoothing capacitor C2 via diode D1 and current limiting resistor R1, so as to elevate the level at output point E of auxiliary power supply 16 (i.e., internal high voltage level). The clamping diode Z2 clamps the level at point E to a fixed value, which is higher than or equal to the threshold voltage of the main switch S1.

When the charging voltage at terminal E reaches a preset value, the high voltage starter unit 19 will start and charge the energy storage capacitor C4, so that the voltage across energy storage capacitor C4 will rise; when the voltage across the energy storage capacitor C4 rises to a preset value, the LDO begins to operate normally and outputs stable DC voltage, so as to provide trigger voltage for the control circuit 15 and activate the control circuit 15; the main control unit 151 controls the main switch S1 to switch on, and the ON time of main switch S1 is proportional to the current output to the power inductor L2. Now, the current sampling unit 153 detects the electric current in the sampling resistor R2 and treats the current signal to obtain the information of average current value output to the DC load 14, and then inputs the information to the main control unit 151, then compare the average current value with a preset value to decide whether to increase or decrease the ON time of main switch S1, and ultimately the output current is equal to the preset value. No matter whether the DC load 14 or the input voltage fluctuates, the main control unit 151 can dynamically regulate the ON/OFF time of main switch S1 to obtain expected output current.

In the embodiment, the startup process of the high voltage start circuit 19 is detailed as follows:

When the circuit is powered on, the start control tube P1 doesn't gate on until the level at point E reaches a preset high voltage value; at the moment the level at point E reaches the preset high voltage value, the start control tube P1 will gate on; at that moment, the level at point P (i.e., internal low voltage level) is lower than the threshold voltage of Zener diode Z14, and therefore the start control tube N1 gates on, the current source CS2 charges the energy storage capacitor C4, and therefore the level at point P rises, till the comparator A2 flips and cuts off the control tube N1; at that time, the power-on process is completed, and the control circuit 15 is activated, as shown in Figure 2.

In an embodiment of the present invention, the preset voltage is the series voltage of Zener diodes Z11, Z12, and Z13.

In the embodiments of the present invention, the main control unit 151 regulates the main switch S1 dynamically as follows:

After the main switch S1 is switched on, the current in power inductor L2 will rise; after a while, the main control unit 151 will switch off the main switch S1; when the main switch S1 is switched off, the voltage at node D will rise from 0V gradually, owing to the influence of parasitic capacitance in main switch S1 and rectifier diode D4; when the potential at node D is higher than the potential at node K, the rectifier diode D4 will gate on, and the current in power inductor L2 will be output to the DC load 14 through the rectifier diode D4, and therefore the current in power inductor L2 will fall from the peak value. When the current in the power inductor L2 falls to 0V, the potential at node D will fall owing to the resonance effect between the parasitic capacitance in rectifier diode D4 and main switch S1 and the power inductor L2; after a while, a peak-valley voltage value will occur at the node D; the peak-valley detection unit 154 detects the voltage at node D, and sends the detection result to the main control unit 151 when a peak-valley value is detected; the main control unit 151 drives the main switch S1 via the drive control tube S2 or drive control tube S3, so as to achieve "zero" voltage switch-on with low switching loss.

In the ON period of main switch S1, the main control unit 151 can detect the voltage at node P through a stored energy potential sampling unit 152 to control so as to drive the main switch S1 by choosing the drive control tube S2 or drive control tube S3, as described below:

The stored energy potential sampling unit 152 detects whether the voltage at node P (i.e., the voltage of low voltage control power supply) is within preset range; if the voltage at node P is within the preset range, the main control unit 151 will drive the main switch S1 to switch on through the drive control tube S3; otherwise the main control unit 151 will drive the main switch S1 to switch on through the drive control tube S2, so as to charge the low voltage control power supply while the main circuit operates normally.

In addition, the working power supply of the control circuit 15 is also from the energy storage capacitor C4; during normal operation, the voltage at node P will decrease gradually owing to the current consumption in the control circuit; when the voltage at node P is lower than the preset value, the main control circuit 151 will choose the drive control tube S2 to control the ON/OFF of S1; when a peak-valley voltage value occurs at node D, the main control circuit 151 will control the drive control tube S2 to drive the main switch S1 to switch on; thus, the current will flow through node C to the power inductor L2 and main switch S1, the drive control tube S2 will charge the energy storage capacitor C4; when the voltage at node P reaches a preset upper limit value, the switch control tube S2 will gate off, while the switch control tube S3 will gate on, and normal switching state is achieved.

In the embodiments of the present invention, when the entire circuit is powered on, as the voltage across the energy storage capacitor C4 is low potential, thus, there is no DC power supply in the control circuit 15, and therefore the entire control circuit 15 doesn't work, only the auxiliary power supply 16 works; when the potential at point E is gradually increased to the preset value, the high voltage starter unit 19 will charge the energy storage capacitor C4; the control circuit will not work until the potential in the energy storage capacitor C4 is increased to a fixed value.

In the second embodiment of the present invention, the main control unit 151 can regulate the return difference value of the detection circuit in the stored energy potential sampling unit 152 as required.

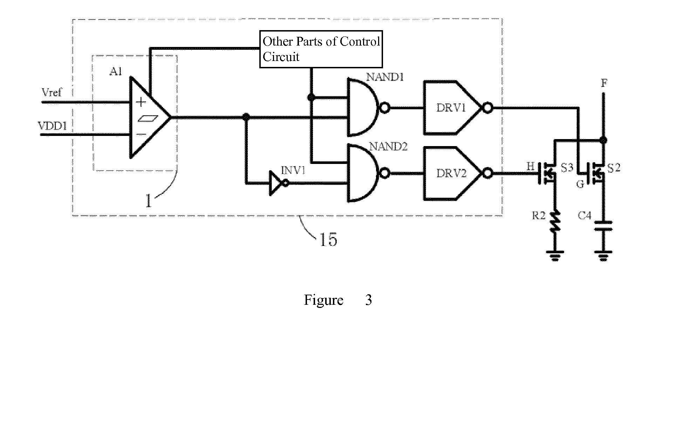

Figure 3 shows the connection structure of a voltage (VDD1) detection and comparison unit with return difference function. For the sake of clarity, only the parts related to the embodiment of the present invention are shown.

In the embodiment of the present invention, the stored energy potential sampling unit 152 comprises a voltage (VDD1) detection and comparison unit 1 with return difference function; the main control unit 151 comprises: a phase inverter INV1, a NOT-AND gate NAND1, a NOT-AND gate NAND2, a driver circuit DRV1, and a driver circuit DRV2.

One input terminal Vref of the voltage (VDD1) detection and comparison unit 1 is connected to the internal reference signal of control circuit 15, the other input terminal of the voltage (VDD1) detection and comparison unit 1 is connected to node P, the control terminal of the voltage (VDD1) detection and comparison unit 1 is connected to other parts of the control circuit, and the output terminal of the voltage (VDD1) detection and comparison unit 1 is connected to an input terminal of the NOT-AND gate NAND1, and is also connected to an input terminal of the NOT-AND gate NAND2 through phase inverter INV1; the other input terminals of the NOT-AND gate NAND1 and NOT-AND gate NAND2 are connected to other parts of the control circuit respectively; the output terminal of the NOT-AND gate NAND1 is connected to the input terminal of the driver circuit DRV1, the output terminal of the driver circuit DRV1 is connected to the control terminal of the drive control tube S2, with the connection point being node G; the output terminal of the NOT-AND gate NAND2 is connected to the input terminal of the driver circuit DRV2, the output terminal of the driver circuit DRV2 is connected to the control terminal of the drive control tube S3, with the connection point being node H.

When the voltage (VDD1) detection and comparison unit with return difference function outputs high level and the pulse width modulation (PWM) signal input is low level, the phase inverter INV1 will output low level, the NOT-AND gate NAND2 will output high level, and the driver circuit DRV2 will output low level; at the same time, the NOT-AND gate NAND1 outputs high level, and DRV1 outputs low level; at that moment, the switch control tube S2 and S3 are in OFF state. When the voltage (VDD1) detection and comparison unit with return difference function outputs high level and the PWM signal input is high level, the driver circuit DRV2 will output low level, the switch control tube S3 will remain in OFF state, but the main switch drive control tube S2 will gate on because the NOT-AND gate NAND1 outputs low level and DRV1 outputs high level; the external current flows through the upper end of the rectifying filter capacitor C1, power inductor L2, main switch S1, and drive control tube S2 to charge the energy storage capacitor C4 at VDD1 side.

The low voltage power supply circuit provided in the embodiments of the present invention can be applied in any conversion power supply that comprises AC-DC conversion power supply and DC-DC conversion power supply, and is especially suitable for use in LED driver circuits.

An implementation process of the drive control method of the optoelectronic devices is provided in the third embodiment of the present invention, comprising the following steps:

Charging the auxiliary power supply, and activating the high voltage starter unit;

Charging the switching circuit, by the high voltage starter unit, to start the control circuit;

Dynamically controlling the switching circuit by the control circuit to charge;

Providing low voltage DC power supply to the control circuit through the switching circuit;

In a preferred embodiment of the present invention, the auxiliary unit starts the high voltage starter unit by charging the smoothing capacitor C2; the high voltage starter unit charges the energy storage capacitor C4 and thereby starts the control circuit; the control circuit controls the switching circuit to charge by controlling the ON time of the main switch S1 and drive control tube S2; the switching circuit detects the potential through the control circuit, when the potential is lower than a preset voltage value, the main switch S1 is switched on through a drive control tube S2 to charge the energy storage capacitor C4; when the potential is higher than the preset voltage value, the main switch S1 is switched on via a drive control tube S2 to obtain stable low-voltage DC power.

In the present invention, the control circuit is started by the auxiliary power supply, and stable low voltage power supply is provided to the control circuit by innovatively charging the energy storage capacitor in the switching circuit and regulating the voltage further with a LDO unit; in that way, the circuit is simplified and the cost is reduced, without reducing the power supply efficiency.

The above are only some preferred embodiments of the present invention, and are not intended to limit the present invention. Any modification, equivalent replacement, and improvement made without departing from the spirit and principle of the present invention shall be deemed as falling into the protection scope of the present invention.

## Claims

1. A low voltage control power supply circuit, connected between a rectifier circuit and a current regulator unit, wherein, the circuit comprising:
An auxiliary power supply, wherein, the input terminal of the auxiliary power supply is connected to the output terminal of the rectifier circuit;
A high voltage starter unit, wherein, the input terminal of the high voltage starter unit is connected to the output terminal of the auxiliary power supply;
A switching circuit, wherein, the first control terminal of the switching circuit is connected to the output terminal of the auxiliary power supply, the input terminal of the switching circuit is connected to the output terminal of the current regulator unit, and the first sampling terminal of the switching circuit is connected to the output terminal of the high voltage starter unit; and
A control circuit, wherein, the main control terminal of the control circuit is connected to the first control terminal of the switching circuit, the stored energy control terminal of the control circuit is connected to the second control terminal of the switching circuit, the current sampling control terminal of the control circuit is connected to the third control terminal of the switching circuit, the capacitance sampling terminal of the control circuit is connected to the first sampling terminal of the switching circuit, the current sampling terminal of the control circuit is connected to the second sampling terminal of the switching circuit, and the peak-valley detection terminal of the control circuit is connected to the output terminal of the current regulator unit;
When the auxiliary power supply is powered up in the circuit, it charges the switching circuit through the high voltage starter unit, to start the control circuit; when the powering up is finished, the control circuit controls the switching circuit dynamically to charge, so as to provide low voltage power supply to the control circuit.

2. The low voltage control power supply circuit according to claim 1, wherein, the low voltage control power supply circuit further comprising:
A low dropout regulator (LDO) unit designed to provide stable low voltage power supply to the control circuit, wherein, the input terminal of the LDO unit is connected to the first sampling terminal of the switching circuit, and the output terminal of the LDO unit is connected to the power input terminal of the control circuit.

3. The low voltage control power supply circuit according to claim 1, wherein, the auxiliary power supply unit comprises:
A diode D1, a current limiting resistor R1, and a smoothing capacitor C2 that are connected in series, and a clamping diode Z2 that is connected in parallel to the smoothing capacitor C2, wherein, the positive electrode of the diode D1 serve ss the input terminal of the auxiliary power supply unit, the negative electrode of the diode D1 is grounded through the current limiting resistor R1 and smoothing capacitor C2, the positive electrode of the clamping diode Z2 is grounded, and the negative electrode of the clamping diode Z2 is the output terminal of the auxiliary power supply unit.

4. The low voltage control power supply circuit according to claim 1, wherein, the switching circuit comprises:
A main switch S1, wherein, the control terminal of the main switch S1 is the first control terminal of the switching circuit and the input terminal of the main switch S1 is the input terminal of the switching circuit;
A drive control tube S2, wherein, the control terminal of the drive control tube S2 is the second control terminal of the switching circuit, the input terminal of the drive control tube S2 is the output terminal of the main switch S1, the output terminal of the drive control tube S2 is the first sampling terminal of the switching circuit and is grounded through the energy storage capacitor C4;
A drive control tube S3, wherein, the control terminal of the drive control tube S3 is the third control terminal of the switching circuit, the input terminal of the drive control tube S3 is connected to the output terminal of the main switch S1, the output terminal of the drive control tube S3 is the second sampling terminal of the switching circuit and is grounded through a sampling resistor R2.

5. The low voltage control power supply circuit according to claim 4, wherein, the main switch S1, drive control tube S2, and drive control tube S3 are discrete devices or an integrated tube.

6. The low voltage control power supply circuit according to claim 1, wherein, the control circuit comprises:
A main control unit, wherein, the energy storage control and output terminal of the main control unit is the energy storage control terminal of the control circuit, and the current control and output terminal of the main control unit is the current sampling control terminal of the control circuit;
A stored energy potential sampling unit, wherein, the input terminal of the stored energy potential sampling unit is the capacitance sampling terminal of the control circuit;
A current sampling unit, wherein, the input terminal of the current sampling unit is the current sampling terminal of the control circuit; and
A peak-valley detection unit, wherein, the input terminal of the peak-valley detection unit is the peak-valley detection terminal of the control circuit.

7. The low voltage control power supply circuit according to claim 1, wherein, the high voltage starter unit comprises:
A comparator A1, a comparator A2, a start control tube P1, a start control tube N1, a current source CS1, a current source CS2, a Zener diode Z11, a Zener diode Z12, a Zener diode Z13, and a Zener diode Z14;
The positive electrode of the current source CS1 is the input terminal of the high voltage starter unit and is connected to the positive electrode of the current source CS2, the negative electrode of the current source CS1 is connected to the positive input terminal of the comparator A1 and the positive input terminal of the comparator A2, the inverted input terminal of the comparator A1 is connected to the positive electrode of the Zener diode Z12, the negative electrode of the Zener diode Z12 is connected to the positive electrode of the Zener diode Z11, the negative electrode of the Zener diode Z11 is connected to the positive electrode of the current source CS1, the inverted input terminal of the comparator A1 is also connected to the negative electrode of the Zener diode Z13, the positive electrode of the Zener diode Z13 is grounded, the output terminal of the comparator A1 is connected to the control terminal of the start control tube P1, the input terminal of the start control tube P1 is connected to the negative electrode of the current source CS2, the output terminal of the start control tube P1 is connected to the input terminal of the start control tube N1, the control terminal of the start control tube N1 is connected to the output terminal of the comparator A2, the output terminal of start control tube N1 is the output terminal of the high voltage starter unit and is connected to the inverted input terminal of the comparator A2, the positive input terminal of the comparator A2 is connected to the negative electrode of the Zener diode Z14, and the positive electrode of the Zener diode Z14 is grounded.

8. A conversion power supply, wherein, it comprises the low voltage control power supply circuit according to any one of claims 1∼7.

9. A drive control method for low voltage control power supply, wherein, said method comprising the following steps:
Charging the auxiliary power supply, and starting the high voltage starter unit;
Charging the switching circuit by the high voltage starter unit, to start the control circuit;
Dynamically controlling the switching circuit by the control circuit to charge;
Providing low voltage DC power supply for the control circuit through the switching circuit;

10. The method according to claim 9, wherein, the auxiliary unit starts the high voltage starter unit by charging the smoothing capacitor C2; the high voltage starter unit charges the energy storage capacitor C4 and thereby starts the control circuit; the control circuit controls the switching circuit to charge by controlling the ON time of the main switch S1 and drive control tube S2; the switching circuit detects the potential through the control circuit; when the potential is lower than a preset voltage value, the main switch S1 is switched on through a drive control tube S2 to charge the energy storage capacitor C4; when the potential is higher than the preset voltage value, the main switch S1 is switched on through a drive control tube S2 to obtain stable low-voltage DC power.
